Europäisches Patentamt

European Patent Office

Office européen des brevets

(11) Numéro de publication: **0 265 357**
**A1**

# (12) DEMANDE DE BREVET EUROPEEN

(21) Numéro de dépôt: 87440063.3

(22) Date de dépôt: **12.10.87**

(51) Int. Cl.⁴: **B 23 Q 3/00**
**B 27 C 1/00**

(30) Priorité: **13.10.86 FR 8614286**

(43) Date de publication de la demande:
**27.04.88 Bulletin 88/17**

(84) Etats contractants désignés:
**AT BE CH DE ES GB GR IT LI NL SE**

(71) Demandeur: **Brunner, Joseph**
**125 rue des Jardins Saint-Louis**
**F-57820 Lutzelbourg (FR)**

(72) Inventeur: **Brunner, Joseph**
**125 rue des Jardins Saint-Louis**
**F-57820 Lutzelbourg (FR)**

(74) Mandataire: **Nuss, Pierre**
**10, rue Jacques Kablé**
**F-67000 Strasbourg (FR)**

(54) **Guide horizontal de support de pièces à toupiller.**

(57) La présente invention concerne un guide horizontal de support de pièces à toupiller.

Guide caractérisé en ce qu'il se présente sous forme d'une plaque plane (1) fixée sur la table (2) de la toupie et dont la face supérieure d'appui de la pièce à toupiller (3) est faiblement inclinée en direction de l'outil (4).

Fig.1

EP 0 265 357 A1

## Description

### Guide horizontal de support de pièces à toupiller

La présente invention concerne le domaine des machines à bois, en particulier des toupies, et a pour objet un guide horizontal de support de pièces à toupiller.

Actuellement, la réalisation de moulures sur les bords de pièces en bois s'effectue généralement par toupillage, c'est-à-dire par passage desdits bords devant un outil de forme monté sur une toupie, les pièces étant posées à plat sur la table de la machine et guidées par leur bord tourné vers l'outil contre des guides mobiles montés sur la table.

Ce mode de fabrication entraîne cependant un noircissement des plates-bandes près des moulures dû au frottement de l'outil sur leur surface, ce frottement ayant pour conséquence un encrassement dudit outil entraînant son usure prématurée, et donc un réaffûtage fréquent. Le noircissement des surfaces des plates-bandes est particulièrement préjudiciable du fait qu'il nécessite un important travail de ponçage manuel entraînant une dépense correspondante de main d'oeuvre.

La présente invention a pour but de pallier ces inconvénients.

Elle a, en effet, pour objet un guide horizontal de support de pièces à toupiller caractérisé en ce qu'il se présente sous forme d'une plaque plane fixée sur la table de la toupie et dont la face supérieure d'appui de la pièce à toupiller est faiblement inclinée en direction de l'outil.

L'invention sera mieux comprise grâce à la description ci-après, qui se rapporte à un mode de réalisation préféré, donné à titre d'exemple non limitatif, et expliqué avec référence au dessin schématique annexé, dans lequel :

la figure 1 est une vue en coupe du guide conforme à l'invention, et

la figure 2 est une vue en plan suivant la figure 1.

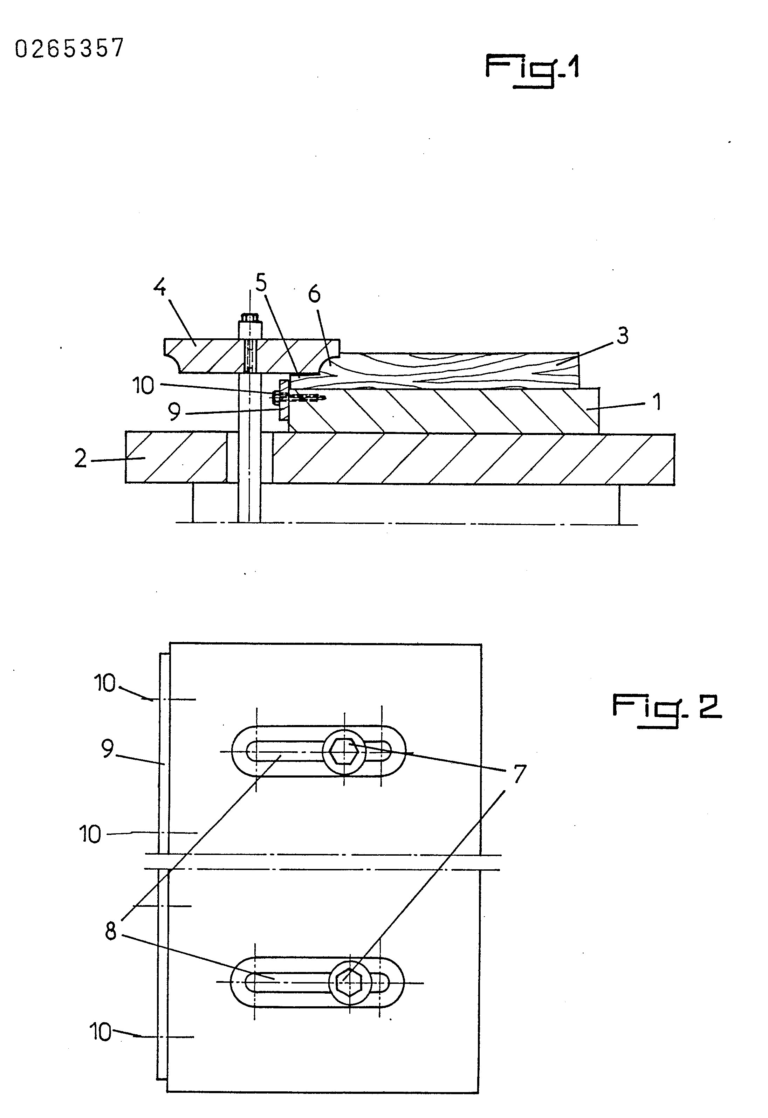

Conformément à l'invention, et comme le montrent les figures 1 et 2 du dessin annexé, le guide horizontal de support de pièces à toupiller se présente sous forme d'une plaque plane 1 fixée sur la table 2 de la toupie. La surface supérieure d'appui de la pièce à toupiller 3 est faiblement inclinée en direction de l'outil 4, de sorte que ce dernier ne porte pas sur la plate-bande 5 pendant la réalisation de la moulure 6.

La plaque 1 est fixée sur la table 2 de la toupie de manière réglable par rapport à l'axe de l'outil 4 au moyen de vis ou de boulons 7 traversant des rainures parallèles 8 s'étendant perpendiculairement au bord tourné vers l'outil 4.

A son bord tourné vers l'outil 4, la plaque 1 est munie, en outre, d'un guide longitudinal 9 de butée du bord de la pièce à toupiller 3, fixé sur le bord de la plaque 1 au moyen de vis 10 avec possibilité de réglage en hauteur. Ce guide 9 permet d'assurer un positionnement correct constant de la pièce 3 et ainsi une exécution parfaite des moulures 6.

La face supérieure d'appui de la plaque 1 est inclinée par rapport à l'horizontale d'un angle qui est avantageusement compris entre 0,15° et 0,75°, et est, de préférence, de 0,35°. Une telle inclinaison de la face supérieure permet de réaliser les moulures 6 sans que l'outil 4 porte par sa face inférieure sur les plates-bandes 5, tout en évitant que l'inclinaison desdites moulures 6 par rapport aux plates-bandes 5 et à la face supérieure de la pièce 3 soit visible, ce qui nuirait à la qualité esthétique du produit obtenu. En outre, une telle inclinaison permet une entrée optimale de l'outil 4 dans la pièce 3, c'est-à-dire évitant une attaque trop brutale.

Grâce à l'invention, il est possible de réaliser des moulures sur des pièces en bois sans risquer un noircissement par brûlure des plates-bandes dû à un frottement de la partie inférieure de l'outil sur ces dernières. Ainsi, un encrassement de l'outil et une usure prématurée sont également évités, de sorte que la tenue de coupe de l'outil peut être notablement augmentée.

Bien entendu, l'invention n'est pas limitée au mode de réalisation décrit et représenté au dessin annexé. Des modifications restent possibles, notamment du point de vue de la constitution des divers éléments, ou par substitution d'équivalents techniques, sans sortir pour autant du domaine de protection de l'invention.

## Revendications

1. Guide horizontal de support de pièces à toupiller caractérisé en ce qu'il se présente sous forme d'une plaque plane (1) fixée sur la table (2) de la toupie et dont la face supérieure d'appui de la pièce à toupiller (3) est faiblement inclinée en direction de l'outil (4).

2. Guide, suivant la revendication 1, caractérisé en ce que la plaque (1) est fixée sur la table (2) de la toupie de manière réglable par rapport à l'axe de l'outil (4) au moyen de vis ou de boulons (7) traversant des rainures parallèles (8) s'étendant perpendiculairement au bord tourné vers l'outil (4).

3. Guide, suivant l'une quelconque des revendications 1 et 2, caractérisé en ce qu'à son bord tourné vers l'outil (4), la plaque (1) est munie d'un guide longitudinal (9) de butée du bord de la pièce à toupiller (3), fixé sur le bord de la plaque (1) au moyen de vis (10) avec possibilité de réglage en hauteur.

4. Guide, suivant l'une quelconque des revendications 1 à 3, caractérisé en ce que la face supérieure d'appui de la plaque (1) est inclinée par rapport à l'horizontale d'un angle qui est avantageusement compris entre 0,15° et 0,75° et est, de préférence, de 0,35°.

0265357

Fig.1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 380 934 (PELLATON) --- | 1 | B 23 Q 3/00 B 27 C 1/00 |
| A | DE-C- 846 790 (MINDEN) --- | 1 | |
| A | DE-C- 600 422 (ALTHÖFER) --- | 1 | |
| A | AT-B- 355 792 (LINDNER) --- | 1 | |
| A | DE-A-2 937 069 (WOLFF) ----- | 1 | |

**DOMAINES TECHNIQUES RECHERCHES (Int. Cl.4)**

B 23 Q
B 27 C

Le présent rapport a été établi pour toutes les revendications

| Lieu de la recherche | Date d'achèvement de la recherche | Examinateur |
|---|---|---|
| LA HAYE | 05-01-1988 | DE GUSSEM J.L. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...................................................................................
& : membre de la même famille, document correspondant

EPO FORM 1503 03.82 (P0402)